# EUROPEAN PATENT SPECIFICATION

(11) **EP 1 168 777 B1**
(45) Date of publication and mention of the grant of the patent: **05.04.2006**
(21) Application number: 01660110.6
(22) Date of filing: 11.06.2001
(51) Int. Cl.: H04M 1/02, H04M 1/725, H04B 1/38, H04M 1/27, H04Q 7/32

(54) **User interface for radio telephone**
Benutzerschnittstelle für ein Funkgerät
Interface utilisateur pour un radiotéléphone

(30) Priority: 22.06.2000 FI 20001494
(43) Date of publication of application: 02.01.2002
(73) Proprietor: Nokia Corporation, 02150 Espoo (FI)
(72) Inventor: Kinnunen, Kimmo, 44100 Aänekoski (FI); Koivisto, Matti, 20810 Turku (FI); Perheentupa, Eljas, 02180 Espoo (FI)
(74) Representative: Kupiainen, Juhani Kalervo

(56) References cited:
- EP-A- 0 865 184
- EP-A- 0 913 977
- WO-A-98/49816
- BE-A- 1 011 293
- CA-A- 2 012 199
- DE-A- 19 605 019
- GB-A- 2 326 051
- PATENT ABSTRACTS OF JAPAN vol. 2000, no. 01, 31 January 2000 (2000-01-31) & JP 11 284706 A (KYOCERA CORP), 15 October 1999 (1999-10-15)

## Description

The invention is directed to a user interface for a digital radio telephone comprising first functional elements placed on the front surface of the shell of the phone, which first functional elements advantageously comprise at least a keypad, display, microphone and a speaker, second functional elements placed at the upper end of the shell and/or on the sides of the shell, which second functional elements comprise various function keys, and third functional elements placed on the rear surface of the shell of the radio telephone. The invention is further directed to the use of the user interface.

Different authorities such as the police, fire brigade and border guards generally use radio telephones in their internal communication. Especially in this kind of use a radio telephone should have an easy-to-use and simple user interface so that communication and calls can be carried out quickly and easily. Communication, as carried out by these different authorities, often takes the form of group communication, i.e. the same message is sent to several persons or groups. With conventional radio telephones this has been realized in such a manner that messages addressed to different groups have been transmitted on different radio channels.

Conventional analog radio telephones in use are simple so-called walkie-talkie type of devices that include a push-to-talk (PTT) key, channel selector and volume control. In addition to these basic functions the radios may have other functions, too. The volume control and channel changing are usually realized by a rotary switch or pushbuttons placed at the upper part of the radio. Conventional radio telephones are simple in their operation and rather modest in their ergonomics and design: they are box-like apparatuses designed to be attached to a hip belt or to a strap pulled over the shoulder. The usage of these phones is limited to communication by speech only.

The newest radio telephones designed for use by different authorities utilize digital technology and the possibilities it offers. Digital technology has made it possible to have considerably more features and functions in radio telephones, at the same time substantially enhancing the information security of radio traffic. Digitalization makes it possible to optimally share the capacity of radio channels between multiple users, which enhances the efficiency of group communication, among other things. Furthermore, digital technology makes it possible to transmit different types of data by means of the radio telephone. Digital radio telephones designed for use by different authorities may function as system radios in a network comprised of base stations or they may communicate direct with other (nearby) radio telephones. In the latter case they function, like a conventional walkie-talkie, as direct channel radios. A plurality of different functions may be pre-programmed in digital radio telephones.

As the basic functions of radio telephones increase with digital technology, the number of function keys in a radio telephone presumably increases as well. Therefore, the operation of the radio becomes more difficult and complex. This is a drawback especially in cases where the radio is used by the authorities, whereby the user interface of the radio should be easy to use, reliable and quick, especially in emergencies.

The usability of a digital radio can be enhanced by arranging a wire connection from the radio attached to the hip belt to a speaker-microphone headset provided with a PTT key. This solution, however, calls for two separate devices and a wire between them, making such an arrangement expensive and difficult to use. Moreover, the wire between the devices may easily break or be caught in something, resulting in disconnection and degraded occupational safety.

Document EP-A-0 865 184 discloses an electronic device with two main faces, which are turned away from each other. The device may be formed by joining together two devices or it may be a monoblock with two useful faces comprising means for interaction with the user. In case of two combined devices, one device maybe a mobile telephone.

Document GB-A-2 326 051 discloses a mobile telephone having two display areas, which are viewable from different directions. The display arrangement enables the user to see the other display area even when the phone is carried on a belt or in a holster.

Document EP-A-0 913 977 discloses a radiotelephone handset comprising a housing having a front and a rear face and a user interface comprising a display and input means for manipulating the content of the display. The display is provided on the front face and the input means on the rear face of the handset.

Document JP 11284706 discloses a portable telephone set comprising a case having a 1^{st} and a 2^{nd} side. A microphone and a speaker are placed on the 2^{nd} side of the case and a display and a key operation section on the 1^{st} side of the case.

Document CA-A-2 012 199 discloses a communications handset comprising presenting means for presenting items of a menu. The presenting means can comprise a visual display and/or an audible voice signal. The handset may be used in portable or cellular phones.

An object of this invention is to provide a wholly new kind of radio telephone user interface by means of which it is possible to reduce the drawbacks and disadvantages of digital radio telephones designed especially to be used by the different authorities. Another object of the invention is to provide an easy-to-use user interface by means of which a digital radio telephone can be used like a conventional walkie-talkie.

The user interface according to the invention is characterized by that which is specified in the independent claims. Advantageous embodiments of the invention are presented in the dependent claims.

Conventional radio telephones intended to be used by the authorities have functional elements arranged on the front surface, upper end and sides of the shell of the phone, including at least a keypad, display, microphone and a speaker and normally a number of other functional elements. These functional elements constitute the user interface of the phone to control the functions of the phone. Because of the location of the user interface, it is usually required that the phone be held in hand when it is being used. The basic idea of the invention is that functional elements are added onto the rear surface of the phone shell, thus achieving a simpler and easier-to-use second user interface in the phone. Thanks to the invention, it is no longer necessary to hold the phone in hand when using it, but the phone may also be used attached to a carrying means.

An advantage of the invention is that it is economical. The user interface according to the invention replaces the conventionally used separate headset-microphone connected to the phone, achieving savings in equipment costs.

Another advantage of the invention is that it is versatile and easy to use. The user interface according to the invention includes in one and the same device both the conventional systems phone user interface for normal communication and a simple walkie-talkie type of user interface for emergencies.

A further advantage of the invention is that it is safe and reliable. The user interface according to the invention includes no easily broken parts outside the shell structure that could cause malfunctioning in the phone or degrade the occupational safety of the user of the phone.

The invention is described more closely in the following. The description makes reference to the accompanying drawings, in which
Fig. 1 shows by way of example a radio telephone equipped with a user interface according to the invention, shown diagonally from the front,
Fig. 2 shows by way of example a radio telephone equipped with a user interface according to the invention, shown diagonally from the back, and
Fig. 3 shows by way of example a radio telephone equipped with a user interface according to the invention, placed in a carrying means.

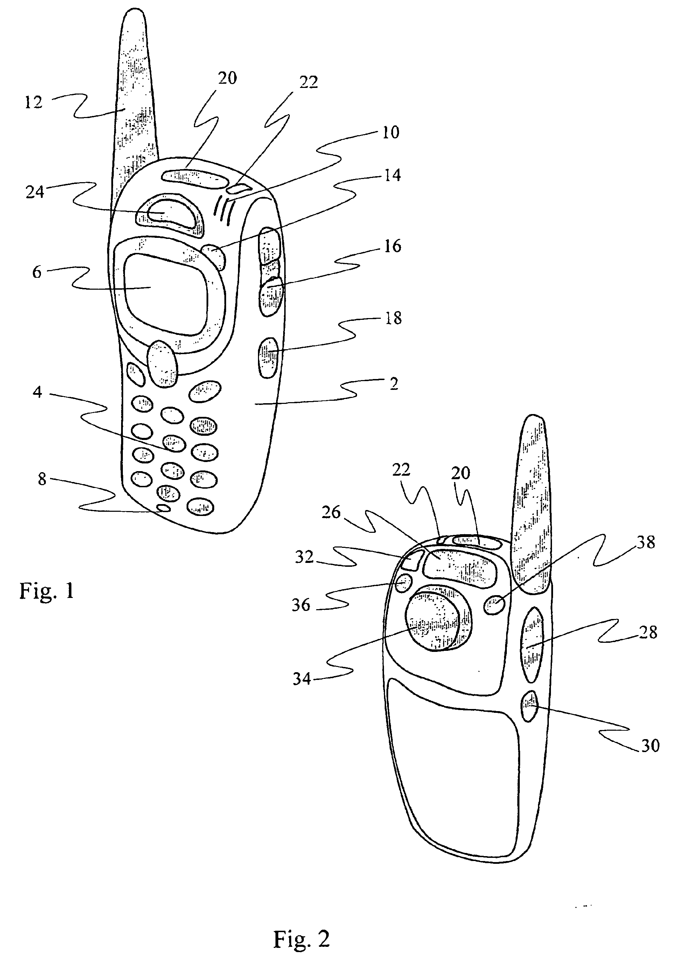

Fig. 1 shows by way of example a diagonal front view of a radio telephone designed especially to be used by the authorities, which radio telephone has a user interface according to the invention. The radio telephone comprises a closed shell 2 at the upper end of which an antenna 12 is positioned. In this description the upper end of the radio refers specifically to that end of the shell of the radio to which the antenna is attached, and the lower end refers to the end opposite to that end. The shell has got two opposing surfaces, a front surface and a rear surface, as well as two sides, the first side and the second side. The front surface refers to the surface visible in Fig. 1 and, conversely, the rear surface refers to the surface opposite to that surface. The front surface of the shell houses the functional elements conventionally belonging to a digital radio telephone: keypad 4, display 6, microphone 8, speaker 10, and a power switch 14. In this description the functional elements on the front surface are called the first functional elements.

The first side of the shell houses a volume control switch 16 and a voice recognition button 18. The volume control switch is a rocker button to control the volume of the sound emanating from the speaker 10 or rear speaker 26 (Fig. 2) of the phone. The voice recognition button is pushed in order to utilize functions in the radio telephone that can be controlled and selected by voice commands. Functions controlled by voice recognition are used in such a manner that the user presses the voice recognition button and at the same time utters a command for a function programmed on the phone, whereafter the phone performs the function.

In the vicinity of the upper end of the radio telephone there additionally is an emergency button 20, light indicator 22 and a selection switch 24. The emergency button is a function switch generally belonging to radios used by the authorities and when it is pushed, the phone immediately places a call to a preprogrammed number, say to the officer on duty. The light indicator indicates by lights of different colors whether the phone is functioning as it should and whether it is in talk or listen mode. The selection switch 24 is used to choose whether incoming voice messages will be heard from the speaker 10 on the front surface or from the rear speaker 26 on the rear surface of the radio telephone.

Fig. 2 shows the radio telephone of Fig. I viewed diagonally from the rear, showing the rear surface and the second side of the phone. Arranged on the second side of the phone there is a PTT key 28 and a quick button 30. The PTT key is used when taking group calls either in direct channel mode or in systems radio mode. Pressing the PTT key then establishes a voice connection with the other radio telephones in the same group. The quick button is a function key that can be programmed to perform a desired quick function, such as sending out a call to the officer on duty by the push of the button. The functional elements on the sides and upper end of the shell of the radio telephone are in this description called the second functional elements.

The above-described first and second functional elements located on the front, first and second side, and at the upper end of the radio telephone constitute the user interface generally used in radios used by the authorities. This user interface is intended to be used when the phone is held in hand and both hands or at least one hand can be continuously used for holding the phone and controlling the functions. However, the manipulation of a phone provided with such an interface is difficult when the phone cannot be held in hand. In that case the phone must be attached to a belt or shoulder strap, and a wired headset complete with microphone must be connected to the phone.

The user interface according to the invention comprises in addition to the aforementioned first and second functional elements, also third functional elements located at the rear surface of the shell intended to be used especially when the radio telephone for some reason, say an emergency, cannot be held continuously in hand. These third functional elements comprise a rear speaker 26, rear microphone 32 and a group selector switch 34. The user of the phone uses the group selector switch to select the group which he wants to join. The selected group is the group to which the voice of the user is transmitted when he presses the PPT key, and from which voice messages are primarily received. The group selector switch is a rotary switch, meaning that a suitable group is selected by rotating the switch into the appropriate position by means of a thumb, for example. A voice response functionality may be arranged in the phone, which means that the phone uses a recorded voice message to inform the user about the group name or group list index at which the selector is positioned. As the user finds the group he wants, he stops rotating the group selector switch, whereby the group in question is selected. The phone uses a voice response message to inform the user after a short delay that the group in question has been selected. Because of the voice response functionality, group selection does not necessarily require that the user sees the phone.

The group selector switch is arranged so as to function as, in addition to a rotary switch, also as a pushbutton so that pressing the selector switch makes the phone to alternate between the two last selected groups. Because of the pushbutton functionality, the user of the phone can quickly change back and forth between two groups by simply pressing the selector switch, which is useful especially in emergencies.

The third functional elements additionally comprise a scanning button 36 and mode selector button 38 at the rear surface of the shell. By pressing the scanning button the user of the phone may listen to the voice traffic between groups within the coverage area of the radio telephone, and the mode selector button is used to make the phone operate either as a direct channel phone or systems phone. Mode selection or voice traffic monitoring do not necessarily require separate buttons but these functions of the phone can be arranged to be taken into use e.g. through the phone's menu commands or voice recognition functions, instead of separate selector buttons.

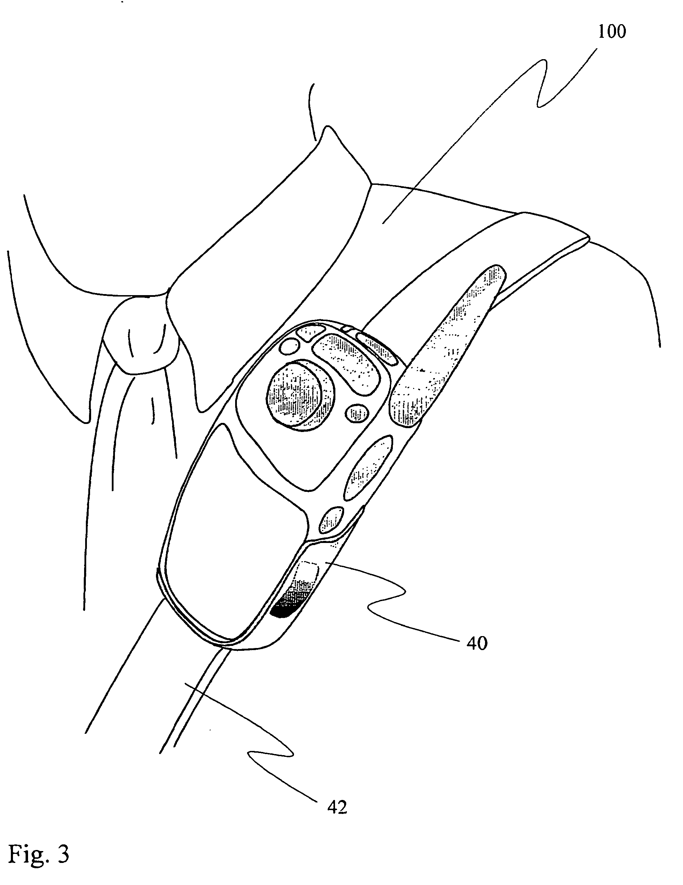

Fig. 3 shows by way of example a radio telephone equipped with a user interface according to the invention placed on a carrying means 40 attached to a strap 42 going over the shoulder of the user 100. The carrying means is a trough-like protective case in which the phone is placed upright so that the antenna 12 of the phone points upwards and the front surface of the shell 2 of the phone faces the user. The edges of the carrying means are arranged so as to be tightly pressed against the sides and lower end of the phone so that the phone sits tightly in its place in the carrying means. Because of the second and third functional elements on the sides, upper end and rear surface of the radio telephone the phone can be used even when installed in the carrying means. So, using the phone does not necessarily require that the phone be taken in hand. The functions of the phone can be controlled by the fingers of one hand and/or using the voice recognition functions in the phone. Speaking on the phone and listening to the calls do not require that the phone be removed from the carrying means as the rear microphone 32 and rear speaker 26 of the phone placed in the vicinity of the user's shoulder are close enough to the user's head. Thus, because of the user interface according to the invention, no separate wired headset is needed in the phone. To use the rear microphone and rear speaker one naturally has to select them using the selection switch 24.

A radio telephone equipped with the user interface according to the invention is intended to be used installed in the carrying means especially when the phone is used in an emergency and it is difficult or impossible to hold the phone continuously in hand. In such a situation the phone may function either as a direct channel phone or as a systems phone depending on which mode has been selected. The user needs to touch the phone only when manipulating the functional elements of the phone. Such situations include e.g. the sending of a group message, in which case the PTT key 28 is pressed during speech, or the selection of a group by turning or pressing the group selector switch 34. In many emergency situations it suffices to use just these two functional elements, whereby the phone functions like a conventional walkie-talkie. Other functions requiring manipulation by hand include the pushing of the emergency button 20, voice recognition button 18 or quick button 30 as well as the operation of the scanning button 36, mode selector button 38, selection switch 24 or the volume control switch 16. All these keys are arranged on the shell of the phone in such a manner that they can be easily manipulated by fingers even when the user is not directly viewing the phone. Thus, because of the user interface according to the invention, the functions essential from the voice communication and emergency standpoint are all the time easily and quickly available always when the phone is installed in the carrying means 40. Naturally, the functional elements located on the rear surface can be used also when the phone is not kept in the carrying means.

When the user prefers to use the radio telephone in hand, he grabs the phone by one hand and lifts the phone out of the carrying means 40. The phone thus lifted from the carrying means is automatically "correctly" positioned in the user's hand, i.e. the display 6 and keypad 4 face outwards of the user's palm. In this position the radio telephone can be used like a normal cellular phone to transmit and receive calls and/or data. The selection switch 24 is used to select the speaker 10, whereby incoming speech can be heard by the user alone.

In an advantageous embodiment of the invention the radio telephone user interface includes a sensor that detects when the phone is installed in a carrying means. The phone is thereupon automatically placed in a state in which incoming voice messages are heard from the rear speaker 26. A function may also be programmed in the phone such that voice messages are automatically heard from the front speaker 10 always when the phone is not in the carrying means. In that case, when the phone is taken in hand, it always functions like a conventional cellular phone. Because of the automatic selection function, the user of the phone will not need to use the selection switch 24. The automatic speaker selection is an optional function in the phone, i.e. each user may himself choose whether this function is activated or not.

The user interface according to the invention is especially well suited for phones used by the authorities, in which a simple and easy-to-use user interface is needed for emergency situations. However, the invention is not limited to such phones only, but it can be used, where applicable, in other radio telephones as well, such as in cellular phones intended for civilian use. In this advantageous embodiment of the invention the rear microphone and rear speaker on the rear surface of the cellular phone replace separate so-called hands-free devices.

Above it was described some advantageous embodiments of the user interface according to the invention. The invention is not limited to the solutions described above, but the inventional idea may be applied in numerous ways within the scope defined by the claims attached hereto.

## Claims

1. A user interface for a digital radio telephone comprising first functional elements placed on the front surface of the shell (2) of the phone, which first functional elements advantageously comprise at least a keypad (4), display (6), microphone (8) and a speaker (10), second functional elements placed at the upper end of the shell and/or on the sides of the shell, which second functional elements comprise various function keys, and third functional elements placed on the rear surface of the shell of the radio telephone, **characterized in that** said third functional elements and second functional elements are arranged so as to together function as a second alternative user interface of a phone.

2. A user interface according to claim 1, **characterized in that** the manipulation of the third functional elements is possible while the radio telephone is in a carrying means (40).

3. A user interface according to claim 1, **characterized in that** the third functional elements comprise a group selector switch (34).

4. A user interface according to claim 3, **characterized in that** the group selector switch (34) is arranged to function as a rotary switch for selecting a group by turning the selector switch.

5. A user interface according to claim 3, **characterized in that** the group selector switch (34) is arranged to function as a pushbutton switch for selecting a group by pushing the selector switch.

6. A user interface according to claim 5, **characterized in that** a push of the group selector switch (34) is arranged so as to select the previous selected group.

7. A user interface according to claim 4, **characterized in that** a voice response function is arranged in conjunction with the group selector switch (34) to convey information to the user by means of a recorded voice message.

8. A user interface according to claim 7, **characterized in that** a group name or index is given in the recorded voice message.

9. A user interface according to claim 8, **characterized in that** the transition of the phone to the group selected is arranged so as to take place after the sounding of the voice message and that there is a temporal delay between the voice message and the transition to the group.

10. A user interface according to claim 7, **characterized in that** the recorded voice message gives confirmation of the selection of a group.

11. A user interface according to claim 1, **characterized in that** the third functional elements comprise a rear speaker (26).

12. A user interface according to claim 1, **characterized in that** the third functional elements comprise a mode selector switch (38) to set the radio telephone to function as a direct channel radio or as a systems radio.

13. A user interface according to claim 1, **characterized in that** the third functional elements comprise a rear microphone (32).

14. A user interface according to claim 1, **characterized in that** the third functional elements comprise a speech recognition button (18) to use functions in the phone that can be controlled by the user's voice commands.

15. A user interface according to claim 11, **characterized in that** the third functional elements comprise a selection switch (24) for setting the incoming voice messages to be reproduced by the speaker (10) or rear speaker (26).

16. A user interface according to claim 11, **characterized in that** it has an automatic function for setting the voice messages to be automatically reproduced by the rear speaker (26) when the phone is in a carrying means (40), and for setting the voice message to be automatically reproduced by the speaker (10) when the phone is not in the carrying means (40).

17. The use of the user interface according to claim 1 especially in radio telephones intended to be used by the authorities.

18. The use of the user interface according to claim 1 in radio telephones intended for civilian use.

## Patentansprüche

1. Benutzerschnittstelle für ein digitales Funktelefon, umfassend
- erste funktionale Elemente, die auf der vorderen Fläche des Gehäuses (2) des Telefons angeordnet sind, wobei die ersten funktionalen Elemente vorteilhafterweise mindestens ein Tastenfeld (4), eine Anzeigeeinrichtung (6), ein Mikrofon (8) und einen Lautsprecher (10) umfassen;
- zweite funktionale Elemente, die an dem oberen Ende des Gehäuses und/oder auf den Seiten des Gehäuses angeordnet sind, wobei die zweiten funktionalen Elemente verschiedene Funktionstasten umfassen; und
- dritte funktionale Elemente, die auf der hinteren Fläche des Gehäuses des Funktelefons angeordnet sind;
**dadurch gekennzeichnet, dass** die dritten funktionalen Elemente und die zweiten funktionalen Elemente so angeordnet sind, dass sie zusammen als eine zweite alternative Benutzerschnittstelle eines Telefons dienen.

2. Benutzerschnittstelle nach Anspruch 1, **dadurch gekennzeichnet, dass** die Manipulation der dritten funktionalen Elemente möglich ist, während sich das Telefon in einem Tragemittel (40) befindet.

3. Benutzerschnittstelle nach Anspruch 1, **dadurch gekennzeichnet, dass** die dritten funktionalen Elemente einen Gruppenwahlschalter (34) umfassen.

4. Benutzerschnittstelle nach Anspruch 3, **dadurch gekennzeichnet, dass** der Gruppenwahlschalter (34) eingerichtet ist, um als ein Drehschalter zum Auswählen einer Gruppe mittels Drehen des Wahlschalters zu dienen.

5. Benutzerschnittstelle nach Anspruch 3, **dadurch gekennzeichnet, dass** der Gruppenwahlschalter (34) eingerichtet ist, um als ein Drucktastenschalter zum Auswählen einer Gruppe mittels Drücken des Wahlschalters zu dienen.

6. Benutzerschnittstelle nach Anspruch 5, **dadurch gekennzeichnet, dass** ein Drücken des Gruppenwahlschalters (34) eingerichtet ist, um die vorhergehende ausgewählte Gruppe auszuwählen.

7. Benutzerschnittstelle nach Anspruch 4, **dadurch gekennzeichnet, dass** eine Sprachantwortfunktion eingerichtet ist, in Verbindung mit dem Gruppenwahlschalter (34) Informationen mittels einer aufgezeichneten Sprachnachricht an den Benutzer zu übermitteln.

8. Benutzerschnittstelle nach Anspruch 7, **dadurch gekennzeichnet, dass** ein Gruppenname oder -Index in der aufgezeichneten Sprachnachricht angegeben wird.

9. Benutzerschnittstelle nach Anspruch 8, **dadurch gekennzeichnet, dass** der Übergang des Telefons in die ausgewählte Gruppe eingerichtet ist, um nach der Wiedergabe der Sprachnachricht stattzufinden, und dass es eine zeitliche Verzögerung zwischen der Sprachnachricht und dem Übergang in die Gruppe gibt.

10. Benutzerschnittstelle nach Anspruch 7, **dadurch gekennzeichnet, dass** die aufgezeichnete Sprachnachricht eine Bestätigung der Auswahl einer Gruppe angibt.

11. Benutzerschnittstelle nach Anspruch 1, **dadurch gekennzeichnet, dass** die dritten funktionalen Elemente einen hinteren Lautsprecher (26) umfassen.

12. Benutzerschnittstelle nach Anspruch 1, **dadurch gekennzeichnet, dass** die dritten funktionalen Elemente einen Moduswahlschalter (38) umfassen, um das Funktelefon so einzustellen, um als eine Direktkanalfunkeinrichtung oder als eine Systemfunkeinrichtung zu dienen.

13. Benutzerschnittstelle nach Anspruch 1, **dadurch gekennzeichnet, dass** die dritten funktionalen Elemente ein hinteres Mikrofon (32) umfassen.

14. Benutzerschnittstelle nach Anspruch 1, **dadurch gekennzeichnet, dass** die dritten funktionalen Elemente eine Spracherkennungstaste (18) umfassen, um Funktionen in dem Telefon zu nutzen, die durch Sprachbefehle des Benutzers gesteuert werden können.

15. Benutzerschnittstelle nach Anspruch 11, **dadurch gekennzeichnet, dass** die dritten funktionalen Elemente einen Wahlschalter (24) umfassen, um einzustellen, dass die eingehenden Sprachnachrichten durch den Lautsprecher (10) oder hinteren Lautsprecher (26) wiedergegeben werden.

16. Benutzerschnittstelle nach Anspruch 11, **dadurch gekennzeichnet, dass** sie eine automatische Funktion aufweist, um einzustellen, dass die Sprachnachrichten automatisch von dem hinteren Lautsprecher (26) wiedergegeben werden, wenn sich das Telefon in einem Tragemittel (40) befindet, und um einzustellen, dass die Sprachnachricht automatisch von dem Lautsprecher (10) wiedergegeben wird, wenn sich das Telefon nicht in dem Tragemittel (40) befindet.

17. Die Verwendung der Benutzerschnittstelle nach Anspruch 1, insbesondere in Funktelefonen, die für eine Verwendung durch die Behörden vorgesehen sind.

18. Die Verwendung der Benutzerschnittstelle nach Anspruch 1, in Funktelefonen, die für eine zivile Verwendung vorgesehen sind.

## Revendications

1. Interface utilisateur pour un radiotéléphone numérique comprenant des premiers éléments fonctionnels placés sur la surface avant de la coque (2) du téléphone, lesquels premiers éléments fonctionnels comprennent, de manière avantageuse, au moins un panneau de touches (4), un affichage (6), un microphone (8) et un haut-parleur (10), des seconds éléments fonctionnels placés au niveau de l'extrémité supérieure de la coque et/ou sur les côtés de la coque, lesquels seconds éléments fonctionnels comprennent diverses touches de fonction, et des troisièmes éléments fonctionnels placés sur la surface arrière de la coque du radiotéléphone, **caractérisée en ce que** lesdits troisièmes éléments fonctionnels et lesdits seconds éléments fonctionnels sont agencés de façon à fonctionner ensemble comme seconde interface utilisateur alternative d'un téléphone.

2. Interface utilisateur selon la revendication 1, **caractérisée en ce que** la manipulation des troisièmes éléments fonctionnels est possible tandis que le radiotéléphone est dans un mode transport (40).

3. Interface utilisateur selon la revendication 1, **caractérisée en ce que** les troisièmes éléments fonctionnels comprennent un groupe de commutateur de sélecteur (34).

4. Interface utilisateur selon la revendication 3, **caractérisée en ce que** le commutateur de sélecteur de groupe (34) est agencé pour fonctionner comme commutateur rotatif pour sélectionner un groupe en tournant le commutateur sélecteur.

5. Interface utilisateur selon la revendication 3, **caractérisée en ce que** le commutateur sélecteur de groupe (34) est conçu pour fonctionner comme commutateur de bouton poussoir pour sélectionner un groupe en poussant le commutateur sélecteur.

6. Interface utilisateur selon la revendication 5, **caractérisée en ce qu'**une poussée du commutateur sélecteur de groupe (34) est conçue de façon à sélectionner le groupe sélectionné précédent.

7. Interface utilisateur selon la revendication 4, **caractérisée en ce qu'**une fonction de réponse vocale est conçue en liaison avec le commutateur sélecteur de groupe (34) pour véhiculer les informations à l'utilisateur au moyen d'un message vocal enregistré.

8. Interface utilisateur selon la revendication 7, **caractérisée en ce qu'**un nom de groupe ou un indice de groupe est procuré dans le message vocal enregistré.

9. Interface utilisateur selon la revendication 8, **caractérisée en ce que** la transition du téléphone au groupe sélectionné est conçue de façon à avoir lieu après l'envoi du message vocal et **en ce qu'**il existe un délai temporel entre le message vocal et la transition au groupe.

10. Interface utilisateur selon la revendication 7, **caractérisée en ce que** le message vocal enregistré fournit une confirmation de la sélection d'un groupe.

11. Interface utilisateur selon la revendication 1, **caractérisée en ce que**' les troisièmes éléments fonctionnels comprennent un haut-parleur arrière (26).

12. Interface utilisateur selon la revendication 1, **caractérisée en ce que** les troisièmes éléments fonctionnels comprennent un commutateur sélecteur de mode (38) pour établir le radiotéléphone pour fonctionner comme canal radio direct ou comme systèmes radio.

13. Interface utilisateur selon la revendication 1, **caractérisée en ce que** les troisièmes éléments fonctionnels comprennent un microphone arrière (32).

14. Interface utilisateur selon la revendication 1, **caractérisée en ce que** les troisièmes éléments fonctionnels comprennent un bouton de reconnaissance de la parole (18) pour utiliser les fonctions dans le téléphone qui peuvent être commandé par des ordres vocaux de l'utilisateur.

15. Interface utilisateur selon la revendication 11, **caractérisée en ce que** les troisièmes éléments fonctionnels comprennent un commutateur de sélection (24) pour établir les messages de voix entrants qui doivent être reproduits par le haut-parleur (10) ou par le haut-parleur arrière (26).

16. Interface utilisateur selon la revendication 11, **caractérisée en ce qu'**elle comporte une fonction automatique pour établir les messages vocaux qui doivent être automatiquement reproduits par le haut-parleur arrière (26) lorsque le téléphone est dans le moyen de transport (40), et pour établir le message vocal qui doit être automatiquement reproduit par le haut-parleur (10) lorsque le téléphone n'est pas dans le moyen de transport (40).

17. Utilisation de l'interface utilisateur selon la revendication 1, spécialement dans des radiotéléphones destinés à être utilisés par les autorités.

18. Utilisation de l'interface utilisateur selon la revendication 1 dans des radiotéléphones destinés à une utilisation civile.
